# EUROPÄISCHE PATENTSCHRIFT

(11) **EP 2 988 091 B1**
(45) Veröffentlichungstag und Bekanntmachung des Hinweises auf die Patenterteilung: **13.12.2017**
(21) Anmeldenummer: 15180513.2
(22) Anmeldetag: 11.08.2015
(51) Int. Cl.: F42B 39/20, F42B 39/24, B65D 19/18

(54) **MEHRWEG-VERPACKUNGSBEHÄLTER FÜR DIE LAGERUNG UND DEN TRANSPORT VON GEFAHRGUTEINHEITEN**
MULTI-USE PACKAGE CONTAINER FOR THE STORAGE AND TRANSPORT OF HAZARDOUS UNITS
RECIPIENT D'EMBALLAGE CONSIGNE POUR LE STOCKAGE ET LE TRANSPORT D'UNITES DE PRODUIT DANGEREUX

(30) Priorität: 20.08.2014 DE 102014216483
(43) Veröffentlichungstag der Anmeldung: 24.02.2016
(73) Patentinhaber: Söhner Kunststofftechnik GmbH Präzisionsthermoformen, 74193 Schwaigern (DE)
(72) Erfinder: Dunz, Thomas, 74360 Ilsfeld (DE)
(74) Vertreter: Patentanwälte Ruff, Wilhelm, Beier, Dauster & Partner mbB

(56) Entgegenhaltungen:
- EP-A1- 1 422 148
- DE-A1- 10 258 742
- GB-A- 2 447 554

## Beschreibung

### ANWENDUNGSGEBIET UND STAND DER TECHNIK

Die Erfindung betrifft einen Mehrweg-Verpackungsbehälter für die Lagerung und den Transport von Gefahrguteinheiten, insbesondere pyrotechnischen Gefahrguteinheiten, mit einer durch einen Behälterboden und seitliche Behälterwandungen gebildeten Behälterwanne, die durch einen Behälterdeckel verschließbar ist, wobei die Behälterwanne innenseitig durch ein flexibles metallisches Maschengeflecht oder Maschennetz ausgekleidet ist, das zu einem geschlossen Hohlkörper verschließbar ist. Das Dokument EP1422148 A1 offenbart einen Mehrweg-Verpackungsbehälter gemäß dem Oberbegriff des Anspruchs 1. Eine Verpackungseinheit für die Lagerung und den Transport von Gefahrgut ist aus der DE 198 33 364 A1 bekannt. Als Gefahrgut sind pyrotechnische Airbageinheiten zu lagern und zu transportieren, die in Kraftfahrzeuge eingebaut werden. Die Airbageinheiten sind in Aufnahmelagen verpackt, die aufeinandergestapelt und auf einer Bodenpalette positionsgesichert werden. Ein Deckel wird auf die oberste Aufnahmelage aufgesetzt. Mithilfe von Spanngurten wird der so gebildete Mehrweg-Verpackungsbehälter aus der Bodenpalette, den Aufnahmelagen und dem Deckel zu einer gemeinsamen Verpackungsanordnung verzurrt. Sowohl die Aufnahmelagen als auch die Bodenpalette und der Deckel sind aus einem Kunststoff im Twin-Sheet-Verfahren zweischalig aufgebaut. Im verzurrten Zustand der Verpackungsanordnung besteht die Verpackungsanordnung einen Prüftest in Form eines Falltests, um eine Zulassung als Gefahrgutbehälter zu erzielen. Dabei wird geprüft, ob die Gefahrguteinheiten aus der Verpackungsanordnung austreten können, falls die Verpackungsanordnung von einem LKW stürzen sollte.

### AUFGABE UND LÖSUNG

Aufgabe der Erfindung ist es, einen Mehrweg-Verpackungsbehälter der eingangs genannten Art zu schaffen, der eine weiter verbesserte Gefahrgutzulassung ermöglicht.

Diese Aufgabe wird dadurch gelöst, dass die seitlichen Behälterwandungen zusammenfaltbar ausgeführt und in zusammengefaltetem Zustand zwischen Behälterboden und Behälterdeckel verstaubar sind, und dass das flexible Maschengeflecht mithilfe mechanischer Fixiermittel an zugewandten Begrenzungsflächen der seitlichen Behälterwandungen lösbar oder unlösbar befestigt ist. Das flexible metallische Maschengeflecht oder Maschennetz innerhalb der Behälterwanne des Mehrweg-Verpackungsbehälters ermöglicht das Bestehen des sogenannten Bonfire-Tests, bei dem der Mehrweg-Verpackungsbehälter einschließlich der in dem Mehrweg-Verpackungsbehälter aufgenommenen Gefahrguteinheiten starker Feuerhitze ausgesetzt wird, um zu prüfen, ob bei der Explosion entsprechender pyrotechnischer Treibsätze Teile der Gefahrguteinheiten aus dem Mehrweg-Verpackungsbehälter austreten. Das flexible metallische Maschengeflecht oder Maschennetz, das nach dem Beladen der Gefahrguteinheiten zu einem geschlossenen Hohlkörper verschlossen wird, stellt sicher, dass keine Teile der explodierenden Gefahrguteinheiten nach außen treten können. Durch die Maschen des Maschengeflechts oder Maschennetzes, d.h. durch die Durchbrüche in diesem Maschengeflecht oder Maschennetz, kann der durch entsprechende Explosionen aufgebaute Druck entweichen. Dadurch, dass das flexible metallische Maschengeflecht oder Maschennetz die Innenseite der Behälterwanne auskleidet, ergibt sich im Inneren der Behälterwanne nahezu kein Volumenverlust, da entsprechende Wandungen des durch das Maschengeflecht oder Maschennetz gebildeten Hohlkörpers zumindest weitgehend flächig an den Innenwandungen der Behälterwanne anliegen.

In Ausgestaltung der Erfindung ist der Hohlkörper als würfel- oder quaderförmiger Sack gestaltet. Ein derartiger Sack oder Beutel weist demzufolge Wandungen auf, die zu einem würfel- oder quaderförmigen Gebilde zusammengefügt sind. Vorzugsweise ist eine obere Wandung lediglich längs einer Seite mit einer anschließenden Seitenwandung verbunden, um den entsprechend gebildeten Beutel oder Sack offen zu gestalten. Die würfel- oder quaderförmige Gestaltung ist derart auf entsprechende Flächenabmessungen der Behälterwanne abgestimmt, dass die entsprechenden Wandungen des würfel- oder quaderförmigen Sacks oder Beutels flächig an den Innenwandungen der Behälterwanne anliegen können. Die Flächenabmessungen des Ringgeflechts sind demzufolge auf die Flächenabmessungen der seitlichen Behälterwandungen des Behälterbodens und des Behälterdeckels abgestimmt. Dabei sind bezüglich der Behälterwandungen, des Behälterbodens und des Behälterdeckels die der Innenseite zugewandten Flächenabmessungen gemeint. Gemäß der Erfindung sind die seitlichen Behälterwandungen zusammenfaltbar ausgeführt und in zusammengefaltetem Zustand zwischen Behälterboden und Behälterdeckel verstaubar. Dadurch ist es möglich, den Verpackungsbehälter in leerem Zustand mit zusammengefalteten Behälterwandungen zu transportieren, die zwischen dem direkt auf den Behälterboden aufgesetzten Behälterdeckel und dem Behälterboden positioniert sind. Das Volumen des Verpackungsbehälters für einen Leertransport wird hierdurch erheblich reduziert. Durch die Flexibilität des Maschengeflechts oder Maschennetzes kann dieses gemeinsam mit den Behälterwandungen, die vorzugsweise zu einem Faltwandungsring zusammengeführt sind, zusammengelegt werden.

In weiterer Ausgestaltung der Erfindung ist das metallische Maschengeflecht oder -netz aus Edelstahl hergestellt. Hierdurch ist gewährleistet, dass das Maschengeflecht oder Maschennetz keiner Korrosion unterworfen ist, die die Haltbarkeit des Maschengeflechts oder Maschennetzes beeinträchtigen könnte.

In weiterer Ausgestaltung der Erfindung ist als Maschengeflecht ein Ringgeflecht vorgesehen. Das aus Edelstahl bestehende Ringgeflecht ist entsprechend den Kettenhemden von mittelalterlichen Ritterrüstungen gestaltet. Derartige Ringgeflechte werden heute insbesondere zur Herstellung von Fleischerhandschuhen eingesetzt. Zur Herstellung des Ringgeflechts werden Edelstahlringe allseitig ineinander gehängt, wobei die Edelstahlringe jeweils als geschlossene Ringe ausgeführt werden. Gemäß der Erfindung ist das flexible Maschengeflecht oder -netz mithilfe mechanischer Fixiermittel an zugewandten Begrenzungsflächen der seitlichen Behälterwandungen lösbar oder unlösbar befestigt. Dadurch ist gewährleistet, dass das flexible metallische Maschengeflecht oder -netz auch in leerem Zustand im Wesentlichen flächig an den zugewandten Wandungsflächen der seitlichen Behälterwandungen anliegt. Durch die Fixierung des flexiblen Maschengeflechts oder Maschennetzes an den seitlichen Behälterwandungen kann das Maschengeflecht oder Maschennetz gemeinsam mit den Behälterwandungen zusammengefaltet werden. Ergänzend ist es möglich, eine Bodenfläche des Maschengeflechts oder Maschennetzes lösbar oder unlösbar mit dem Behälterboden und/oder mit dem Behälterdeckel zu verbinden.

In weiterer Ausgestaltung der Erfindung sind der Behälterboden, die seitlichen Behälterwandungen und der Behälterdeckel in Twin-Sheet-Bauweise aus Kunststoff, insbesondere aus HD-PE, hergestellt. Hierdurch wird eine hohe Schlagzähigkeit des Verpackungsbehälters erzielt, so dass der Verpackungsbehälter neben dem Bonfire-Test auch einen entsprechenden Falltest überstehen kann. Das Bestehen des Bonfire-Tests und des Falltests ermöglicht die Zulassung des Verpackungsbehälters als Gefahrgutbehälter gemäß einer UN-Norm, so dass ein internationaler Transport mit einem entsprechenden Verpackungsbehälter sowohl zu Land als auch zu Luft und zu Wasser ermöglicht ist.

In weiterer Ausgestaltung der Erfindung ist zum Verschließen der Hohlkörperwandungsabschnitte des Maschengeflechts ein Verschlussstrang vorgesehen, der randseitige Maschenreihen miteinander verbindet. Der Verschlussstrang ist vorzugsweise metallisch gestaltet und kann flexible oder formstabil ausgeführt sein.

In weiterer Ausgestaltung der Erfindung ist der Verschlussstrang als Reißverschluss, als flexibler Metallstrang oder als formstabiles Stangenprofil gestaltet. Bei einer Ausführung als flexibler Metallstrang ist vorteilhaft ein Edelstahlseil oder ein Edelstahldraht vorgesehen. Als formstabiles Stangenprofil ist vorzugsweise eine Edelstahlstange mit rundem Querschnitt vorgesehen.

### KURZBESCHREIBUNG DER ZEICHNUNGEN

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in perspektivischer Explosionsdarstellung eine Ausführungsform eines erfindungsgemäßen Mehrweg-Verpackungsbehälters und
- Fig. 2: in vergrößerter Darstellung einen Ausschnitt II eines Wandungsabschnitts des quaderförmigen Maschengeflechts des Mehrweg-Verpackungsbehälters gemäß Fig. 1.

### DETAILLIERTE BESCHREIBUNG DER AUSFÜHRUNGSBEISPIELE

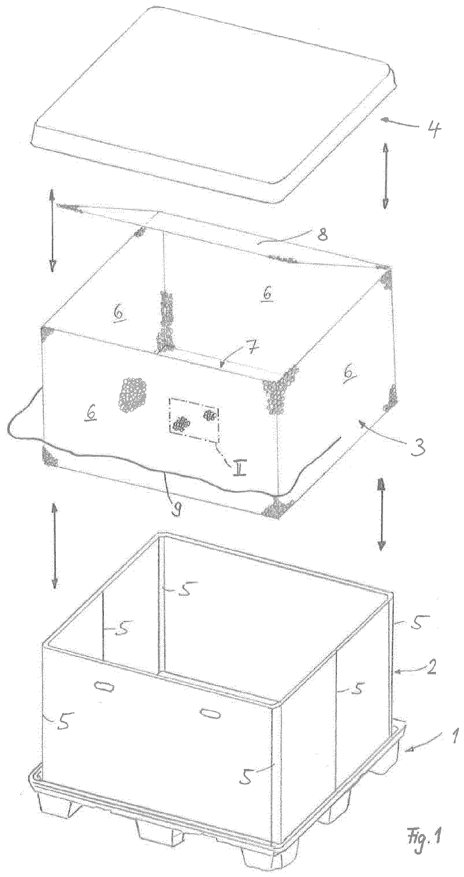

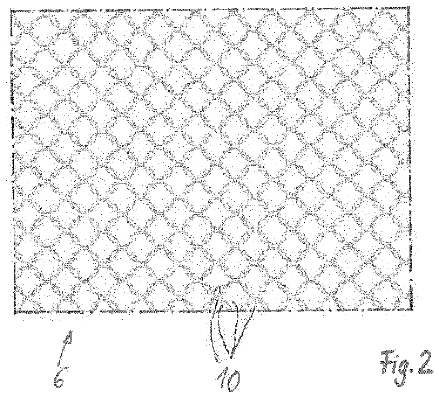

Ein Mehrweg-Verpackungsbehälter nach den Fig. 1 und 2 ist für die Lagerung und den Transport von pyrotechnischen Airbageinheiten vorgesehen, die in Kraftfahrzeuge eingebaut werden. Zur Aufnahme dieser Airbageinheiten weist der Verpackungsbehälter einen palettenförmigen Bodenteil 1, einen durch umlaufende seitliche Behälterwandungen gebildeten Faltwandungsring 2 sowie einen Deckel 4 auf. Die Behälterwandungen des Faltwandungsrings 2 sind im Bereich von eckseitigen Falzkanten 5 sowie im Bereich von mittigen Falzlinien, die als Falzkanten 5 dienen, zusammenfaltbar. Alle Falzkanten 5 definieren zueinander parallele Falzachsen, die in aufgestelltem Zustand des Faltwandungsrings 2 vertikal ausgerichtet sind. Sowohl der Bodenteil 1 als auch der Faltwandungsring 2 und der Deckel 4 sind in Twin-Sheet-Bauweise zweischalig aus einem Kunststoff, vorliegend HD-PE, hergestellt. Die Abmessungen des Bodenteils 1 entsprechen bekannten Euro-Paletten. Der Faltwandungsring 2 ist in den wannenartigen Bodenteil 1 eingesteckt und gemäß Fig. 1 in aufgerichtetem Zustand in dem Bodenteil 1 gesichert. Hierdurch bilden der Bodenteil 1 und der Faltwandungsring 2 eine Behälterwanne im Sinne der Erfindung. Die Behälterwanne wird ausgekleidet durch ein flexibles metallisches Ringgeflecht 3, das als quaderförmiger Hohlkörper gestaltet ist. Das Ringgeflecht 3 besteht aus vier miteinander verbundenen Seitenwandungen 6 sowie aus einer Bodenwandung 7, die mit den Seitenwandungen 6 umlaufend verbunden ist. Zudem umfasst das Ringgeflecht 3 eine Deckwandung 8, die an einer Längsseite mit der benachbarten Seitenwandung 6 verbunden ist. Die entsprechenden Wandungsabschnitte 6 bis 8 des Ringgeflechts 3 gehen an ihren benachbarten Randkanten durchgängig ineinander über durch entsprechende Gestaltung des Ringgeflechts 3. Das Ringgeflecht 3 besteht aus einer Vielzahl von Edelstahlringen 10 (Fig. 2), die gemäß Fig. 2 umlaufend ineinandergeflochten sind. Der durch das Ringgeflecht gebildete quaderförmige Hohlkörper ist demzufolge einstückig als Sack oder Beutel ausgeführt. Dieser Sack oder Beutel wird in den Faltwandungsring 2 eingesetzt. Anschließend werden die entsprechenden Wandungsabschnitte 6, die die Seitenwandungen bilden, über nicht dargestellte mechanische Fixiermittel in Form von Nieten, Haken oder Ähnlichem mit den entsprechenden Seitenwandungen des Faltwandungsrings 2 verbunden, um ein Auskleiden des Seitenwandungsrings 2, d.h. ein im Wesentlichen flächiges Anliegen des Ringgeflechts 3 an den Innenwandungen des Faltwandungsrings 2, zu gewährleisten. Nun können mehrere Airbageinheiten, gegebenenfalls mittels eigener Verpackungseinheiten, in dem Hohlraum innerhalb des als Hohlkörper gestalteten Ringgeflechts 3 eingesetzt und gestapelt werden. Sobald der Hohlraum befüllt ist, wird die Deckwandung 8 des Ringgeflechts 3 verschlossen. Hierzu ist bei der dargestellten Ausführungsform ein schematisch angedeutetes Edelstahlseil 9 vorgesehen, das durch benachbarte randseitige Maschenreihen der Deckwandung 8 und der Seitenwandungen 6 des Ringgeflechts 3 hindurchgefädelt wird. Anschließend kann in einfacher Weise der Deckel 4 auf die Oberseite des Faltwandungsrings 2 aufgesetzt werden. In nicht dargestellter Weise wird der so gebildete Verpackungsbehälter noch über Spanngurte verzurrt, die oben über den Deckel 4 und unten unter dem Bodenteil 1 hindurch gezogen werden. Der so gebildete Verpackungsbehälter besteht sowohl einen entsprechenden Falltest als auch einen Bonfire-Test, die für eine UN-Zulassung als Gefahrgutbehälter notwendig sind.

## Patentansprüche

1. Mehrweg-Verpackungsbehälter für die Lagerung und den Transport von Gefahrguteinheiten, insbesondere pyrotechnischen Gefahrguteinheiten, mit einer durch einen Behälterboden (1) und seitliche Behälterwandungen (2) gebildeten Behälterwanne, die durch einen Behälterdeckel (4) verschließbar ist, wobei die Behälterwanne innenseitig durch ein flexibles metallisches Maschengeflecht (3) oder Maschennetz ausgekleidet ist, das zu einem geschlossenen Hohlkörper verschließbar ist, **dadurch gekennzeichnet, dass** die seitlichen Behälterwandungen (2) zusammenfaltbar ausgeführt und in zusammengefaltetem Zustand zwischen Behälterboden (1) und Behälterdeckel (4) verstaubar sind, und dass das flexible Maschengeflecht (3) mithilfe mechanischer Fixiermittel an zugewandten Begrenzungsflächen der seitlichen Behälterwandungen (2) lösbar oder unlösbar befestigt ist.

2. Mehrweg-Verpackungsbehälter nach Anspruch 1, **dadurch gekennzeichnet, dass** der Hohlkörper als würfel- oder quaderförmiger Sack gestaltet ist.

3. Mehrweg-Verpackungsbehälter nach Anspruch 1, **dadurch gekennzeichnet, dass** das metallische Maschengeflecht oder -netz aus Edelstahl hergestellt ist.

4. Mehrweg-Verpackungsbehälter nach Anspruch 3, **dadurch gekennzeichnet, dass** als Maschengeflecht ein Ringgeflecht (3) vorgesehen ist.

5. Mehrweg-Verpackungsbehälter nach einem der vorhergehenden Ansprüche, **dadurch gekennzeichnet, dass** die Flächenabmessungen des Maschengeflechts (3) oder Maschennetzes auf die Flächenabmessungen der Behälterwandungen (2), des Behälterbodens (1) und des Behälterdeckels (4) abgestimmt sind.

6. Mehrweg-Verpackungsbehälter nach Anspruch 1, **dadurch gekennzeichnet, dass** der Behälterboden (1), die seitlichen Behälterwandungen (2) und der Behälterdeckel (4) in Twin-Sheet-Bauweise aus Kunststoff, insbesondere HD-PE, hergestellt sind.

7. Mehrweg-Verpackungsbehälter nach Anspruch 1, **dadurch gekennzeichnet, dass** zum Verschließen der Hohlkörperwandungsabschnitte des Maschengeflechts (3) ein randseitige Maschenreihen miteinander verbindender Verschlussstrang (9) vorgesehen ist.

8. Mehrweg-Verpackungsbehälter nach Anspruch 7, **dadurch gekennzeichnet, dass** der Verschlussstrang (9) als Reißverschluss, als flexibler Metallstrang oder als formstabiles Stangenprofil gestaltet ist.

## Claims

1. Multi-use package container for the storage and transportation of units of hazardous material, in particular units of pyrotechnic hazardous material, comprising a container trough composed of a container bottom (1) and lateral container walls (2), with a container lid (4) to close the trough, wherein the container trough has an interior lining made of a flexible metallic mesh netting (3) or mesh lattice which is lockable to form a closed hollow body,
**characterized in that**
the lateral container walls (2) are configured to be folded up and to be stowed in the folded-up condition between container bottom (1) and container lid (4), and **in that** the flexible mesh netting (3) is detachably or non-detachably fixed to opposed boundary surfaces of the lateral container walls (2) using mechanical fixation means.

2. Multi-use package container according to claim 1, **characterized in that** the hollow body is designed as a cube-shaped or rectangular-shaped bag.

3. Multi-use package container according to claim 1, **characterized in that** the metallic mesh netting or lattice is made of stainless steel.

4. Multi-use package container according to claim 3, **characterized in that** a ring mesh (3) is provided as the mesh netting.

5. Multi-use package container according to any of the preceding claims, **characterized in that** the surface area dimensions of the mesh netting (3) or mesh lattice are matched to the surface area dimensions of the container walls (2), the container bottom (1), and the container lid (4).

6. Multi-use package container according to claim 1, **characterized in that** the container bottom (1), the lateral container walls (2) and the container lid (4) are made of synthetic material, in particular HD-PE, in a twin-sheet construction.

7. Multi-use package container according to claim 1, **characterized in that** for closing the hollow body wall sections of the mesh netting (3) a closing strand (9) is provided to interconnect peripheral rows of meshes.

8. Multi-use package container according to claim 7, **characterized in that** the closing strand (9) is designed in the form of a zip fastener, a flexible metal strand or a dimensionally stable profiled bar.

## Revendications

1. Récipient d'emballage réutilisable pour le stockage et le transport d'unités de matières dangereuses, en particulier d'unités de matières dangereuses pyrotechniques, comprenant un bac du récipient composé par un fond du récipient (1) et des parois du récipient (2) latérales, un couvercle du récipient (4) étant agencé pour fermer le bac, dans lequel le bac du récipient est pourvu d'un revêtement intérieur composé d'un treillis à mailles (3) ou d'un réseau maillé flexible en métal, qui est verrouillable pour former un corps creux fermé,
**caractérisé en ce que**
les parois du récipient (2) latérales sont disposées pour être repliées et, à l'état replié, pour être rangées entre fond du récipient (1) et couvercle du récipient (4), et **en ce que** le treillis à mailles flexible (3) est fixé de façon amovible ou non amovible par le biais de moyens de fixation mécaniques à des surfaces de délimitation des parois du récipient (2) latérales faisant face.

2. Récipient d'emballage réutilisable selon la revendication 1, **caractérisé en ce que** le corps creux est configuré sous forme de sac cubique ou parallélépipédique.

3. Récipient d'emballage réutilisable selon la revendication 1, **caractérisé en ce que** le treillis à mailles ou le réseau maillé métallique est fait d'acier inoxydable.

4. Récipient d'emballage réutilisable selon la revendication 3, **caractérisé en ce qu'**un treillis d'anneaux (3) est fourni pour treillis à mailles.

5. Récipient d'emballage réutilisable selon l'une quelconque des revendications précédentes, **caractérisé en ce que** les dimensions de la surface du treillis à mailles (3) ou réseau maillé sont adaptées aux dimensions de surface des parois du récipient (2), du fond du récipient (1) et du couvercle du récipient (4).

6. Récipient d'emballage réutilisable selon la revendication 1, **caractérisé en ce que** le fond du récipient (1), les parois du récipient (2) latérales et le couvercle du récipient (4) sont fabriqués en matière synthétique, en particulier en HD-PE, par construction double feuille (Twin-Sheet).

7. Récipient d'emballage réutilisable selon la revendication 1, **caractérisé en ce que** pour fermer les sections de paroi du corps creux du treillis à mailles (3) un brin de fermeture (9) est fourni pour interconnecter des rangs de mailles périphériques.

8. Récipient d'emballage réutilisable selon la revendication 7, **caractérisé en ce que** le brin de fermeture (9) est configuré sous forme de fermeture-éclair, brin métallique flexible ou barre profilée indéformable.
